# EUROPÄISCHE PATENTANMELDUNG

(11) **EP 1 101 564 A2**
(43) Veröffentlichungstag der Anmeldung: **23.05.2001**
(21) Anmeldenummer: 00124491.2
(22) Anmeldetag: 09.11.2000
(51) Int. Cl.: B23Q 11/00

(54) **Verfahren zum Entfernen von Spänen bei Werkzeugmaschinen, sowie Vorrichtung zur Durchführung des Verfahrens**

(30) Priorität: 22.11.1999 DE 19956117; 20.12.1999 DE 19961397
(71) Anmelder: GROB-Werke Dr. h.c. mult. Dipl.-Ing. Burkhart Grob e.K., 87719 Mindelheim (DE)
(72) Erfinder: Högl, Josef, 87719 Mindelheim (DE)
(74) Vertreter: Pfister, Helmut, Dipl.-Ing.

(57) **Zusammenfassung**

Zur Verbesserung der Abfuhr von Spänen bei Werkzeugmaschinen wird vorgeschlagen, daß für die Abspülung der Späne das Werkstück in Bearbeitungspausen gedreht wird um auch die sonst verdeckten Ablagerungsflächen durch die Spülflüssigkeit erreichen zu können.

## Beschreibung

Die Erfindung betrifft ein Verfahren zum Entfernen von Spänen, die bei der Bearbeitung von auf Aufspanneinrichtungen zum Beispiel Tischen befestigten Werkstücken in Werkzeugmaschinen anfallen, wobei von einer oder mehreren Spritzdüsen Spülflüssigkeit auf Flächen gespritzt wird, auf denen sich die Späne ablagern, um diese in Ableitungseinrichtungen für die Späne einzufördern. Die Erfindung betrifft weiter eine Vorrichtung zur Durchführung des Verfahrens.

Bei der Bearbeitung von Werkstücken in modernen Werkzeugmaschinen beziehungsweise Bearbeitungszentren durch Bohren, Drehen, Fräsen oder ähnliche Bearbeitungsvorgänge, entsteht eine große Menge von Spänen, die abgeführt werden müssen, um den Betrieb der Werkzeugmaschinen usw. beziehungsweise auch den Wechsel der Werkstücke oder auch der Werkzeuge nicht zu behindern. Der hohen Leistungsfähigkeit der Werkzeugmaschinen entspricht eine große Spänemenge.

Die Späne werden in der Regel durch eine Spülflüssigkeit abgeschwemmt. Für die Spülflüssigkeit sind eine oder mehrere Spritzdüsen vorgesehen, deren Flüssigkeitsstrahlen sich gegen die Werkstücke beziehungsweise die Aufspanneinrichtungen und auch die Werkzeuge richten, um die Späne vorzugsweise nach unten in geeignete Ableitungseinrichtungen einzufördern. Die Anordnung einer einfachen Spritzdüse genügt in manchen Fällen. In anderen Fällen wiederum ist die Abförderung der Späne durch eine einzelne Spritzdüse, die vorzugsweise gegen die Bearbeitungsstelle gerichtete ist, unbefriedigend. Die Anordnung einer Mehrzahl von Spritzdüsen kann die Lösung des Problems verbessern. Die Steigerung der Zahl der Spritzdüsen bringt aber auch eine Steigerung des Verbrauchs an Spülflüssigkeit mit sich. Die Aufarbeitung der Spülflüssigkeit bedeutet einen zusätzlichen Aufwand.

In dem Dokument EP-0918594-A wird zur Lösung dieses Problems vorgeschlagen, daß ein Sprühkopf vorgesehen wird, der in verschiedene Richtungen einen Flüssigkeitsstrahl abgibt und wobei die Anordnung derart getroffen ist, daß dieser periodisch die Gesamtheit des das Werkstück und die Werkzeuge aufnehmenden Raumes spült. Durch eine solche Anordnung läßt sich zwar die Späneabfuhr verbessern, weil die Spülflüssigkeit weite Bereiche des betreffenden Raumes erreicht, dennoch gibt es fast immer Flächen die von den Werkstücken beziehungsweise den Aufspanneinrichtungen oder auch von anderen Teilen der Werkzeugmaschine so abgedeckt sind, daß sie vom Sprühstrahl nicht erfaßt werden, so daß sich dort die Späne ablagern und aufbauen.

Durch die Erfindung soll ein Verfahren und eine Vorrichtung vorgeschlagen werden, mit der es möglich ist, auch in ungünstigen Fällen eine sichere Späneableitung zu erreichen, ohne daß der Aufwand an Spülflüssigkeit wesentlich gesteigert wird.

Zur Lösung dieser Aufgabe geht die Erfindung aus von dem Verfahren der eingangs angegebene Gattung. Erfindungsgemäß wird vorgeschlagen, daß während des Spülvorganges eine Relativbewegung vorgesehen wird, zwischen mindestens einer der wirksamen Spritzdüsen beziehungsweise deren Austrittsöffungen einerseits und der Aufspanneinrichtung mit dem Werkstück oder den Werkstücken andererseits.

Der Hauptgedanke der Erfindung besteht darin, eine Relativbewegung zwischen Werkstück beziehungsweise den zugehörigen Einrichtungen und der wirksamen Spritzdüse vorzusehen, so daß der Strahl der Spülflüssigkeit aus wechselnden Richtungen auf die Späneablagerungen einwirkt. Die Wahrscheinlichkeit, daß Flächen verbleiben, die vom Flüssigkeitsstrahl nicht erreicht werden, wird stark vermindert beziehungsweise beseitigt und es ist auch nicht notwendig, die aufgewandte Flüssigkeitsmenge zu erhöhen, wie dies bei bekannten Einrichtungen oft vorgesehen ist. Es wurde nämlich gefunden, daß der Flüssigkeitsstrahl vor allem dann eine positive Wirkung hat, wenn der Flüssigkeitsstrahl direkt auf die Späneablagerung trifft. Wenn der Flüssigkeitsstrahl auf andere Flächen trifft, ist diese Flüssigkeitsmenge im wesentlichen ohne Nutzen, weil der reflektierte Strahl nur noch eine sehr geringe kinetische Energie besitzt, also keine ausreichende Förderwirkung mehr äußern kann.

Das erfindungsgemäße Verfahren läßt sich in verschiedener Weise durchführen. So schlägt die Erfindung in erster Linie vor, daß die Auf spanneinrichtung mit den Werkstücken während des Spülvorganges um eine senkrechte Achse oder auch um eine horizontale Achse gedreht wird. Dabei erweist es sich für die Erfindung von wesentlichen Vorteil, daß Einrichtungen für die Durchführung solcher Bewegungen ohnehin vorhanden sind. Diese Einrichtungen dienten bisher beispielsweise dem Bearbeitungsvorgang insbesondere aber der Positionierung der jeweils zu bearbeitenden Werkstücke im Hinblick auf das Werkzeug. Ein zusätzlicher Aufwand wird insofern durch die Erfindung nicht ausgelöst.

Bei einer Variante der Erfindung ist vorgesehen, daß die Spritzdüse beziehungsweise die Spritzdüsen während des Spülvorganges auf einer Kreisbahn bewegt wird beziehungsweise werden. Für diese Bewegung ist ein besonderer Antrieb nicht unbedingt notwendig. Durch eine geeignete Ausrichtung der Spritzdüsen läßt sich der Rückstoß für die Drehbewegung ausnützen.

Die Erfindung läßt sich auch verwirklichen, indem die Spritzdüse auf einer geradlinigen Bahn hin- und herbewegt wird. Auch hierbei kann ein besonderer Antrieb, wenn gewünscht, eingespart werden, indem der Rückstoß sinngemäß ausgenützt wird.

Bei einer Variante der Erfindung sind eine Vielzahl von Spritzdüsenaustrittsöffnungen vorgesehen, die nacheinander oder abwechselnd beaufschlagt werden, so daß sich bezüglich der wirksamen Spritzdüse eine Ortsveränderung ergibt und der Strahl der Spülflüssigkeit aus wechselnden Richtungen auf die zu reinigenden Flächen trifft.

Bei der Vorrichtung zur Durchführung des Verfahrens gemäß der Erfindung ist vorgesehen, daß der Antrieb der Werkzeugmaschine einschließlich des Antriebes der Aufspanneinrichtung, sowie die Steuerung der Zuleitung der Spülflüssigkeit von einer gemeinsamen Steuerung abhängen, welche in Bearbeitungspausen die Bewegungen der Aufspanneinrichtungen für die Werkstücke und/ oder den Zulauf der Spülflüssigkeit beziehungsweise die Bewegung der Spritzdüsen und/oder die Beaufschlagung der Spritzdüsen bestimmen.

Bei einer erfindungsgemäßen Variante ist ein rotierender Arm vorgesehen, der beispielsweise um eine horizontale oder vertikale Achse rotiert und eine oder mehrere Spritzdüsen trägt.

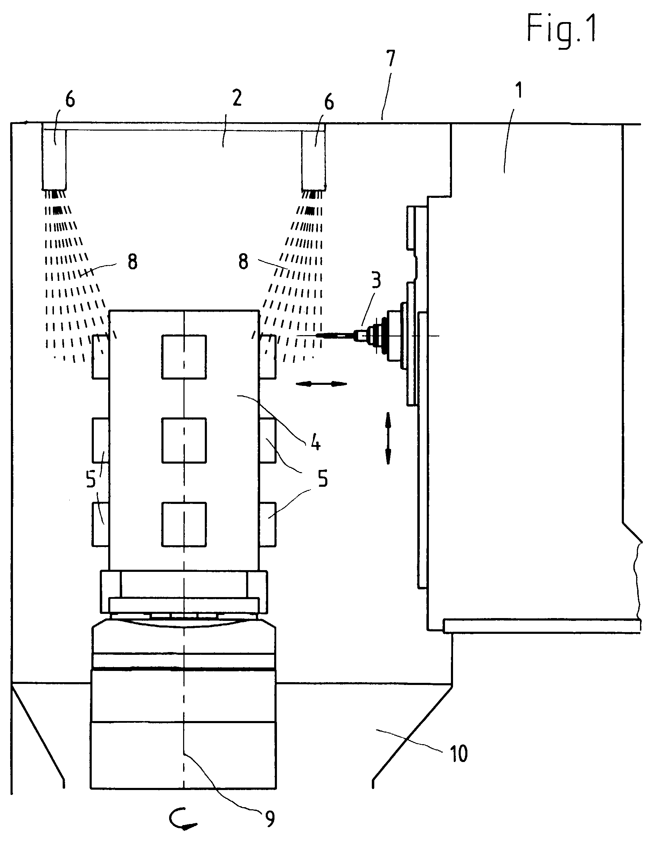

In den Fig. 1, 2, 3 und 4 sind vier verschiedene Ausführungsbeispiele der Erfindung schematisch dargestellt.

In der Fig. 1 ist eine Werkzeugmaschine 1 gezeigt mit einem zum Beispiel allseits geschlossenen Raum 2, in den der Kopf 3 der Werkzeugmaschine hineinragt und in dem auch die Aufspanneinrichtung 4 mit den Werkstücken 5 angeordnet ist. An der Decke 7 des Raumes 2 sind zwei stationäre Spritzdüsen 6 angeordnet, die dauernd oder abwechselnd je einen Flüssigkeitsstrahl 8 gegen die Aufspanneinrichtung 4 beziehungsweise die Werkstücke 5 richten. Während des Spülvorganges dreht sich die Aufspanneinrichtung 4 mit den zugehörigen Einrichtungen um die senkrechte Achse 9.

Die abgespülten Späne gelangen in die Ableitungseinrichtung 10.

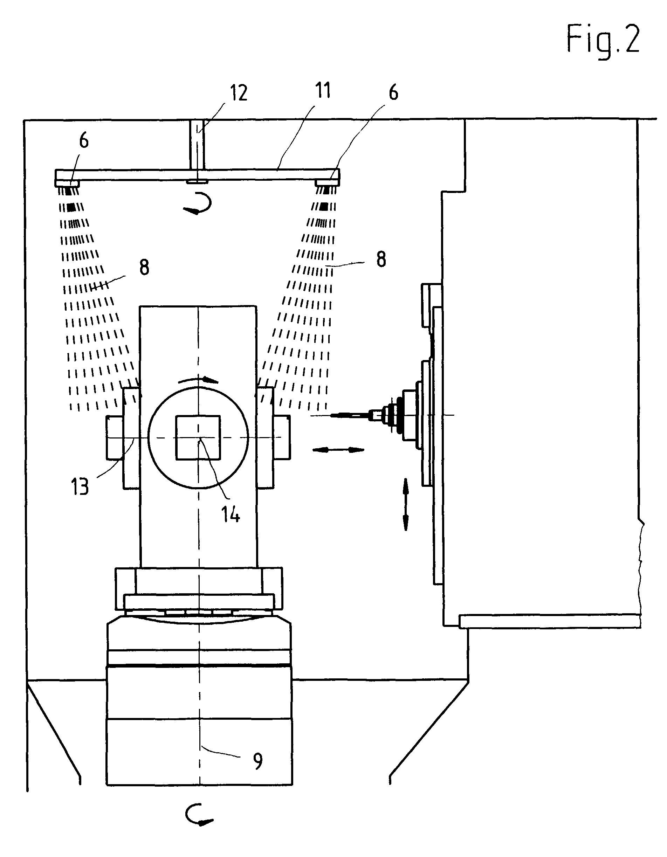

Beim Ausführungsbeispiel nach der Fig. 2 sind die Spritzdüsen 6 an den Enden eines umlaufenden Armes 11 angeordnet, der um eine senkrechte Achse 12 rotieren kann. Die Werkstücke 5 an der Spanneinrichtung 4 können beim Ausführungsbeispiel der Fig. 2 nicht nur um die senkrechte Achse 9 gedreht werden, sondern auch jeweils um die horizontale Achse 13.

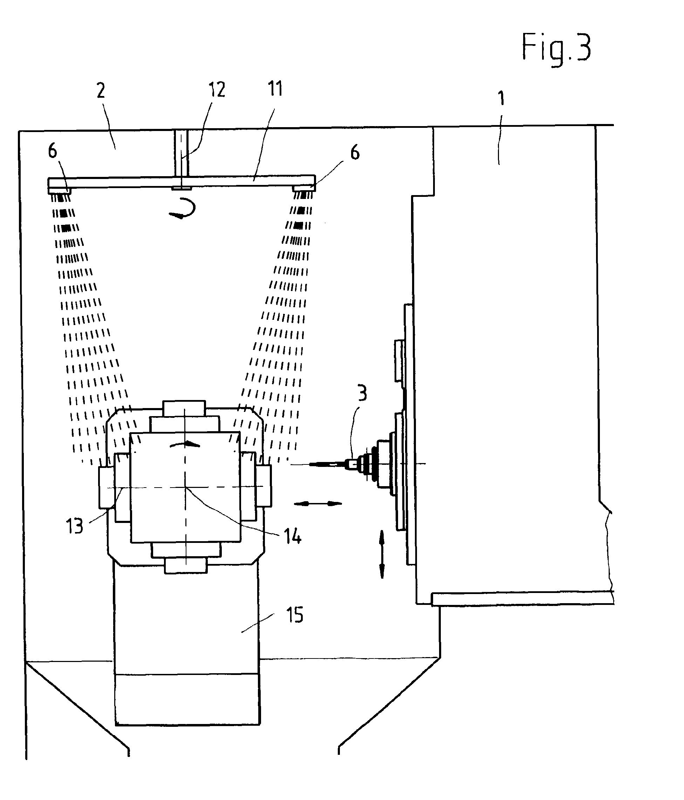

Beim Ausführungsbeispiel nach der Fig. 3 ist vorgesehen, daß die Werkstücke 5 an der Auf spanneinrichtung 4 gehalten sind, die um eine horizontale Achse 14 verdrehbar ist. Die Aufspanneinrichtung 4 ist von einem Ständer 15 getragen.

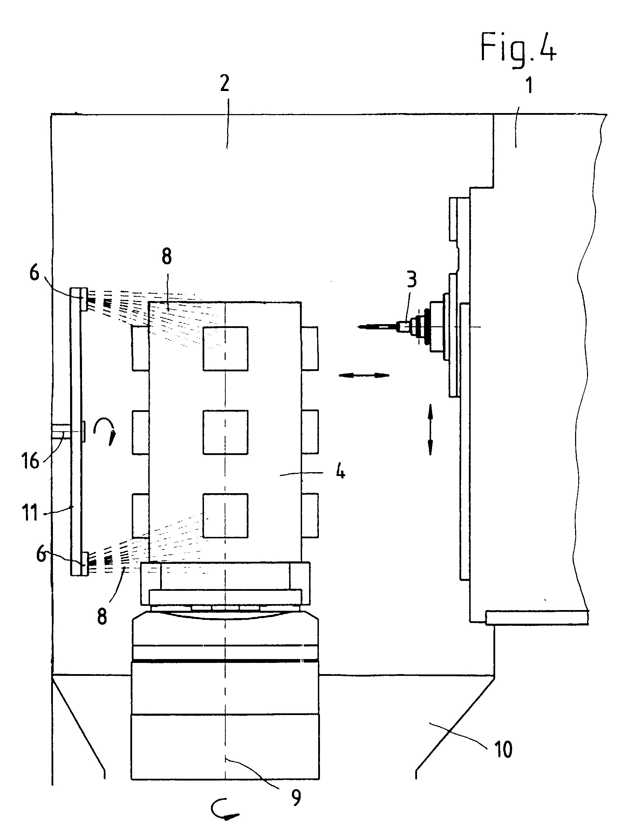

Beim Ausführungsbeispiel nach der Fig. 4 ist vorgesehen, daß ein Arm 11 mit der Spritzdüse 6 um eine horizontale Achse 16 rotiert. Bei dieser Anordnung ergibt sich der Vorteil, daß der Flüssigkeitsstrahl 8 ungefähr parallel zu der Ausrichtung der Flächen wirksam ist, auf denen sich Späne ablagern können.

Im praktischen Betrieb wird in der Regel derart verfahren, daß während des Bearbeitungsvorganges ein Strahl von Spülflüssigkeit auf das Werkstück beziehungsweise die Bearbeitungsstelle gerichtet wird. Ist ein Bearbeitungsschritt abgeschlossen, soll also beispielsweise das Werkzeug gewechselt oder das Werkstück gedreht oder durch ein anderes Werkstück ersetzt werden, wird durch die vorgesehene Steuerung bewirkt, daß ein intensiver Spülvorgang eingeschaltet wird. Die Aufspanneinrichtung mit dem Werkstück oder den Werkstücken kann dabei soweit gedreht werden, daß sie in die Bearbeitungsstellung für den nächsten Bearbeitungsvorgang gelangt, es ist aber auch möglich, eine Drehung um zum Beispiel 360° durchzuführen und während der Drehbewegung oder auch bei eingeschalteten Stillständen den Spülvorgang durchzuführen.

Insbesondere empfiehlt es sich bei der Erfindung während des Spülvorganges, also während der Relativbewegung zwischen den Spritzdüsen einerseits und den zu reinigenden Flächen andererseits mit einem erhöhten Flüssigkeitsdruck zu arbeiten. Da die Reinigungsspanne vergleichsweise kurz ist, ist der Mehrverbrauch an Spülflüssigkeit hinnehmbar.

Die Erfindung ist nicht nur mit Spülflüssigkeit realisierbar, sondern auch mit einem gasförmigen Medium, zum Beispiel mit Druckluft.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Verfahren zum Entfernen von Spänen, die bei der Bearbeitung von auf Aufspanneinrichtungen zum Beispiel Tischen befestigten Werkstücken in Werkzeugmaschinen anfallen, wobei von einer oder mehreren Spritzdüsen ein Spülmedium, insbesondere eine Spülflüssigkeit auf Flächen gespritzt wird, auf denen sich die Späne ablagern, um diese in Ableitungseinrichtungen für die Späne einzufördern, **dadurch gekennzeichnet, daß** während des Spülvorganges eine Relativbewegung vorgesehen wird, zwischen mindestens einer der wirksamen Spritzdüsen beziehungsweise deren Austrittsöffnungen einerseits und der Auf spanneinrichtung mit dem Werkstück oder den Werkstücken andererseits.

2. Verfahren zum Entfernen von Spänen, die bei der Bearbeitung von auf Auf spanneinrichtungen zum Beispiel Tischen befestigten Werkstücken in Werkzeugmaschinen anfallen, wobei von einer oder mehreren Spritzdüsen ein Spülmedium, insbesondere eine Spülflüssigkeit auf Flächen gespritzt wird, auf denen sich die Späne ablagern, um diese in Ableitungseinrichtungen für die Späne einzufördern, **dadurch gekennzeichnet, daß** während des Spülvorganges eine Ortsveränderung der wirksamen Spritzdüsen beziehungsweise deren Austrittsöffnungen und/oder der Aufspanneinrichtung mit dem Werkstück oder den Werkstücken vorgesehen wird.

3. Verfahren nach Anspruch 1 oder 2, **dadurch gekennzeichnet, daß** die Aufspanneinrichtung während des Spülvorganges um eine senkrechte Achse gedreht wird.

4. Verfahren nach einem oder mehreren der vorhergehenden Ansprüche, **dadurch gekennzeichnet, daß** die Aufspanneinrichtung während des Spülvorganges um eine horizontale Achse gedreht wird.

5. Verfahren nach einem oder mehreren der vorhergehenden Ansprüche **dadurch gekennzeichnet, daß** die Spritzdüse (6) oder die Spritzdüsen während des Spülvorganges auf einer Kreisbahn bewegt werden.

6. Verfahren nach einem oder mehreren der vorhergehenden Ansprüche **dadurch gekennzeichnet, daß** die Spritzdüse (6) oder die Spritzdüsen während des Spülvorganges auf einer Bahn hin- und herbewegt werden.

7. Verfahren nach einem oder mehreren der vorhergehenden Ansprüche **dadurch gekennzeichnet, daß** nacheinander eine oder einige einer Mehrzahl von Spritzdüsenaustrittsöffnungen beaufschlagt werden.

8. Vorrichtung zur Durchführung des Verfahrens nach einem oder mehreren der vorhergehenden Ansprüche **dadurch gekennzeichnet, daß** der Antrieb der Werkzeugmaschine (1) einschließlich des Antriebes der Auf spanneinrichtung (4), sowie die Steuerung der Zuleitung der Spülflüssigkeit von einer gemeinsamen Steuerung abhängen, welche in Bearbeitungspausen die Bewegungen der Aufspanneinrichtungen (4) für die Werkstücke (5) und/oder den Zulauf der Spülflüssigkeit beziehungsweise die Bewegung der Spritzdüsen (6) und/oder die Beaufschlagung der Spritzdüsen (6) bestimmen.

9. Vorrichtung nach Anspruch 7, **gekennzeichnet durch** einen rotierenden Arm (11), der vorzugsweise um eine vertikale oder horizontale Achse (12, 16) umläuft, und eine oder mehrere Spritzdüsen (6) trägt.
